# EUROPEAN PATENT SPECIFICATION

(11) **EP 0 315 282 B1**
(45) Date of publication and mention of the grant of the patent: **31.03.1993**
(21) Application number: 88202456.5
(22) Date of filing: 03.11.1988
(51) Int. Cl.: C11D 3/12

(54) **Zeolites in liquid detergent compositions**
Zeolithe in flüssigen Reinigungsmitteln
Zéolites dans des compositions détergentes liquides

(30) Priority: 04.11.1987 GB 8725802
(43) Date of publication of application: 10.05.1989
(73) Proprietor: UNILEVER N.V., 3013 AL Rotterdam (NL); UNILEVER PLC, London EC4P 4BQ (GB)
(72) Inventor: Dekker, Jacob N. P. M., NL-6216 VX Maastricht (NL); Osinga, Theo Jan, NL-6267 AN Cadier en Keer (NL)
(74) Representative: Bakkum, Ruben Joseph

(56) References cited:
- EP-A- 0 015 024
- FR-A- 2 283 221
- FR-A- 2 332 321
- US-A- 4 405 483

## Description

The invention relates to the use of certain zeolite 4A-and/or P1-type powders in liquid detergent compositions and to liquid detergent compositions containing same.

Liquid detergent compositions containing 4A type zeolite powders are known in the art. They have, however, the drawback that the conventional zeolite powders tend to settle in the concentrated detergent compositions and that they are slow to redisperse. The same and other disadvantages can be expected of other conventional zeolite powders.

The structure and characteristics of zeolites are summarised succintly by Donald W. Breck in his standard work, "Zeolite Molecular Sieves" (Robert E. Krieger Publishing Company, Florida, first published 1974).

It has now been found that zeolite powders which are more finely divided than the conventional ones (which have a d₅₀ of above 1.0 micrometer) are very suitable for detergent compositions. More in particular it has been found that 4A- and P1-type zeolite powders having such a particle size distribution that the d₅₀ is between 0.1 and 0.7 micrometer, preferably the d₅₀ is above 0.4 micrometer, can be used with advantage in liquid detergent compositions, more in particular in so-called heavy duty liquid detergent compositions.
(Particle size data, like d₅₀, d₈₀ etc. indicating a diameter at which 50 or 80% by weight of the particles has a smaller size, have here been obtained with a Sedigraph, Trademark, type 5000D, ex Micromeritics, USA.)

These finely divided zeolite powders when applied in liquid detergent compositions secure at least one of the following advantages :
1. The rate of sequestering of calcium and/or magnesium ions from a solution proceeded much more rapidly than with a coarser zeolite powder;
2. Settling of the zeolite powder appeared to be hindered and some dispersions become structured;
3. The concentration of dissolved silicate ions originating from the zeolite in the liquid detergent is about a tenfold factor higher for the finely divided zeolite than for the conventional zeolite and this may favour to inhibit corrosion.
4. The use of the more finely divided zeolite powder suppresses mechanical wear of equipment.
The balance of the above advantages works out differently for the zeolites of the 4A and P1-type and e.g. P1 may dissolve more silicate ions and can be preferred in case more emphasis is to be put on corrosion inhibition.
Particularly preferred is the use of 4A- and/or P1-type zeolite powder also having a d₈₀ below 1 micrometer and the use of material further having a d₉₀ below 3 micrometers is even more advantageous.

FR-A-2 332 321 relates to a detergent builder consisting essentially of an inorganic fine powder composed mainly of an alkali metal aluminosilicate having an X-ray diffraction pattern substantially the same as that of zeolite of the type A. The zeolite type A powder disclosed has a primary particle size smaller than 1 micrometer and a secondary particle size of less than 4 micrometer. In the examples the primary particle size is between 0,4 and 1 micrometer. Considering that the secondary particle size is the size of agglomerated primary particles, this secondary particle size has to be larger than 0,8 micrometer. Therefore, FR-A-2 332 321 discloses a secondary particle size of between 0,8-4 micrometer.

Further it is stated in FR-A-3 332 321 that it is required that a substance having a buffer capacity under alkaline conditions should be used as a detergent builder. To provide zeolites of the type A with a maximum primary particle size smaller than 1 micrometer a smectite clay mineral is subjected to a complicated acid treatment, and it is shown, that a zeolite of the type 4A (fig. 3) has an extremely low buffer capacity (S = 69,1 ml/100 g), whereas the type A zeolite derived from an acid treated smectite clay mineral has a buffer capacity of 150,4 ml/100 g of solids. A secondary particle size of zeolites of the 4A or of the P1 type with a secondary particle size with a D50 between 0,1 and 0,7 micrometer is not disclosed.

From EP-A-0 015 024 mixtures of zeolites and polyacetal carboxylate builders in detergent compositions are known. In one of the examples (example IX) a powder composition containing a zeolite having a diameter of 0.8 micrometer is described. EP-A-0 015 024 discloses a more generic particle size of 0.1 to 100 micrometer, and no indication is given that the advantages of the present invention could be obtained by using the zeolites according to the invention.

US-A-4 405 483 teaches stable liquid detergents containing aluminosilicate ion exchange material. The diameter of the zeolite particles ranges from 0.1 to 10 micrometer. The advantageous effects, obtainable by using zeolites with a very small particle size of 0.1 to 0.7 micrometer are not suggested.

4A-type zeolite powders having a particle size distribution as required in the practice of the present invention were obtained by processes disclosed in German Patent Application (DE-A) 1 095 795. In particular, the product obtained according to Example 2 gave good results and satisfied all of the particle size requirements set out above. In fact a product with a d₅₀ of 0.3-0.5 micrometer was constantly obtained and the d₈₀ was 0.8 micrometer.

A zeolite of the P1-type having a particle size distribution as required in the practice of the present invention was obtained by the following process: Two reactors were used, one of which was equipped with a stirrer. In one of the reactors 0.257 mole of sodiumaluminate (Na₂O:Al₂O₃ = 1.327) was dissolved in water and made up with water to a total weight of 500Kg and this solution was heated to 90°C. In the second reactor 0.903 moles of sodium metasilicate pentahydrate was dissolved in water and made up with water to a total weight of 500 Kg and this solution was also heated to 90° C. The two solutions were mixed quickly under vigorous stirring. The reaction mixture was kept at 90°C for 5 hours whilst stirring normally. The precipitate was filtered off and washed thoroughly with demineralized water. X-ray analysis showed that the material filtered off was zeolite P1 and determination of the particle size indicated that the material had a particle size distribution such that the d₅₀ was 0.44 and the d₈₀ was 0.65. The zeolite material so obtained (wet powder) could be resuspended in water to form a slurry or could be dried.
Of course it is also possible to prepare a zeolite powder of the 4A- and/or P1-type of suitable particle size distribution by milling and sieving a more coarse zeolite starting material. As milling and sieving are cumbersome operations on a technical scale a direct method as described above is preferred.

The present invention provides a liquid detergent composition containing 1 to 40%, preferably 10 to 30% (w.w.) of a 4A- or P1-type zeolite powder which has such a particle size distribution that the d₅₀ is between 0.1 and 0.7 micrometer, preferably above 0.4 micrometer . The zeolite powder serves in this detergent composition as a phosphate replacer, and the composition therefore also contains detergent materials, suspending agents and other conventional compounds like bleaching agents, optical brighteners, perfumes etc. in conventional quantities. Advantageously the liquid detergent composition contains a zeolite material with a d₈₀ below 1 micrometer and preferably the d₉₀ is below 3 micrometers.

More particularly subject of the invention is therefore a liquid detergent composition comprising one or more detergent-active compounds, one or more detergency builders, and optionally other conventional components. The detergent composition includes in particular as a detergency builder a crystalline sodium aluminosilicate of the 4A or P1-type having a d₅₀ between 0.1 and 0.7 micrometer.

Another embodiment of the invention is a method of using a zeolite of the 4A- and/or P1-type, having a particle size distribution as set out above in the manufacture of liquid detergent compositions. Conveniently this manufacture takes place by introducing in a reactor an agueous slurry of the zeolite powder and adding the other ingredients under stirring.

### CALCIUM ION UPTAKE

The calcium ion uptake of the material prepared as described above was compared, both with respect to total capacity and to rate, with that of commercial zeolite A as presently used in detergent compositions. The latter material was Wessalith (Trademark) ex Degussa, a 4A zeolite, d₅₀ = 3.5 micrometers.

The calcium ion uptake capacities were measured by a standard technique and were found to be as follows:

| | |
|---|---|
| Finely divided 4A (see above) | 165-185 mg CaO/g |
| Finely divided P1 (see above) | 150-170 mg CaO/g |
| Wessalith (see above) | 160-185 mg CaO/g |
| (Theoretical maximum | 195 mg CaO/g) |

Thus both materials have a high capacity for taking up calcium ions. Efficacy as a detergency builder also requires that the rate of uptake be sufficiently fast to provide adequate water-softening within the time-scale of the wash process, especially at today's lower wash temperatures.

Accordingly, the rate of uptake of calcium ions at 25°C was also measured, using a calcium ion electrode and pH meter. The results are set out in the table below, which shows the calcium ion concentrations (expressed as 10⁻⁶ mole/litre) of a solution (initial concentration 1000 x 10⁻⁶ mole/litre at different times after initial contact with the aluminosilicate product (1 g/l as dry solid) under test.

| Aluminosilicate | Ca ion concentration after | | | |
|---|---|---|---|---|
| | 10 sec | 30 sec | 1 min | 10 min |
| Finely divided 4A | <1-10 | «1 | | |
| Finely divided P1 | <1 | «1 | | |
| Wessalith | 700 | 1-20 | <1-10 | «1-1 |

The significantly faster calcium ion capture by the finely divided zeolite material prepared as described above will be noted.

### MAGNESIUM ION UPTAKE

The magnesium ion uptake capacity of the aluminosilicate material of the invention was also measured using atomic absorption spectroscopy. The values found were as follows:

| | |
|---|---|
| Finely divided 4A | 58-70 mg MgO/g |
| Finely divided P1 | 55-65 mg MgO/g |
| Wessalith | 0-10 mg MgO/g |

It is thus apparent that the finely divided zeolite material prepared as described above is greatly superior to coarser zeolite 4A in removing magnesium hardness ions from wash liquor.

The zeolite materials used according to the present invention may be incorporated in detergent compositions of the liquid type, at the levels normally used for detergency builders or below those levels. The formulation principles already established for the use of zeolite 4A in detergent compositions may generally be followed. The finely divided material of zeolite A and/or P1 type may be used as sole detergency builder(s), or it may be used in conjunction with other builder materials. Two classes of detergent composition to which the invention is especially applicable are products for washing fabrics (on domestic and industrial scale) as well as products for machine dishwashing.

The total amount of detergency builder in the composition will suitably range from 10 to 40%, preferably 10 to 30% by weight, and this may be constituted wholly or partially by the finely divided zeolite specified above.

Other, supplementary builders may also be present, for example, polycarboxylate polymers such as polyacrylates; acrylic-maleic copolymers, or acrylic phosphonates; monomeric polycarboxylates such as nitrilotriacetates and ethylenediaminetetraacetates; inorganic salts such as sodium carbonate; and many other materials familiar to the skilled detergent formulator.

The invention is of especial applicability to liquid detergent compositions containing no, or reduced levels of, inorganic phosphate builders such as sodium tripolyphosphate, orthophosphate and pyrophosphate.

Detergent compositions of the invention will also contain, as essential ingredients, one or more detergent-active compounds which may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

Anionic surfactants are well known to those skilled in the art. Examples include alkylbenzene sulphonates, particularly sodium linear alkylbenzene sulphonates having an alkyl chain length of C₈-C₁₅; primary and secondary alkyl sulphates, particularly sodium C₁₂-C₁₅ primary alcohol sulphates; olefin sulphonates; alkane sulphonates; dialkyl sulphosuccinates; and fatty acid ester sulphonates.

Nonionic surfactants that may be used include the primary and secondary alcohol ethoxylates, especially the C₁₂-C₁₅ primary and secondary alcohols ethoxylated with an average of from 3 to 20 moles of ethylene oxide per mole of alcohol.

The choice of surfactant, and the amount present, will depend on the intended use of the detergent composition. For example, for machine dishwashing a relatively low level of a low-foaming nonionic surfactant is generally preferred. In fabric washing compositions, different surfactant systems may be chosen, as is well known by the skilled detergent formulator.

The total amount of surfactant present will of course depend on the intended end use and may be as low as 0.5% by weight, for example in a machine dishwashing composition, or as high as 60% by weight, for example in a composition for washing fabrics. For liquid fabric washing compositions in general, an amount of from 3 to 20% by eight is generally appropriate.

A preferred type of detergent composition suitable for use in most automatic fabric washing machines contains anionic and nonionic surfactant together in a weight ratio of at least 0.67:1, preferably at least 1:1, and more preferably within the range of from 1:1 to 10:1.

Detergent compositions according to the invention may also suitably contain a bleach system. Machine dishwashing compositions may suitably contain a chlorine bleach, while fabric washing compositions may contain peroxy bleach compounds, for example, inorganic persalts or organic peroxyacids, which may be employed in conjunction with activators to improve bleaching action at low wash temperatures. Again, the skilled detergent worker will have no difficulty in applying the normal principles to choose a suitable bleach system.

Other materials that may be present in detergent compositions of the invention include sodium silicate, fluorescers, antiredeposition agents, inorganic salts such as sodium sulphate, enzymes, lather control agents or lather boosters as appropriate, pigments, and perfumes. This list is not intended to be exhaustive.

The invention is illustrated by the following examples:

### Example 1

A 1 kg batch of an aqueous liquid detergent composition was prepared: 800 grams of a 37% (w.w.) slurry of zeolite P1 prepared as described above were charged into a 2 litre vessel provided with a stirrer. The appropriate amounts of sodium silicate, sodium carboxymethylcellulose, sodium alkylbenzene sulphonate, potassium oleate and fluorescent agent, all in aqueous solutions, were successively introduced and mixed into the slurry with moderate stirring under slight heating until the temperature reached about 60-70°C. Heating was stopped and stirring continued until a homogeneous mass was obtained. Thereafter the appropriate amounts of alcoholethoxylate and ethanolamide nonionics were mixed into the mass. The mixture was then allowed to cool under constant agitation and hereafter additional water and perfume were added.

A stable, white opaque, homogeneous and pourable liquid detergent of the following composition was obtained:

| Composition | (% by weight) |
|---|---|
| sodium C₁₂-alkylbenzene sulphonate | 6.5 |
| potassium oleate | 1.6 |
| C₁₃-C₁₅ alcohol/7 ethylene oxide | 1.3 |
| coconut monoethanolamide | 1.4 |
| sodium carboxymethylcellulose | 0.05 |
| finely divided zeolite P1 | 20.0 |
| fluorescent agent | 0.1 |
| water + perfume | up to 100.0 |

This composition was stored in transparent plastic bottles under ambient conditions and remained stable after two months.

### Examples 2-4

The following stable, white opaque, homogeneous and pourable liquid detergent compositions were prepared:

| Composition (% by weight) | 2 | 3 | 4 |
|---|---|---|---|
| sodium C₁₂-alkylenebenzene sulphonate | 5 | 6.5 | 8.4 |
| potassium oleate | 1.25 | 1.6 | 2.1 |
| C₁₃-₁₅ alcohol/7 ethylene oxide | 1 | 1.3 | 1.75 |
| coconut fatty acid monoethanolamide | 1 | 1.4 | 1.75 |
| sodium carboxymethylcellulose | 0.1 | 0.05 | 0.05 |
| Finely divided zeolite | 20.0(4A) | 18.0(P1) | 22.0(4A) |
| sodium silicate | - | 2.0 | 2.0 |
| fluorescent agent | 0.1 | 0.1 | 0.1 |
| perfume | 0.4 | 0.4 | 0.4 |
| water | up to 100 | 100 | 100 |

The compositions remained stable after at least 2 months storage under ambient conditions. No change in physical appearance was observed.

## Claims

1. The use of 4A- and/or P1-type zeolite powder having a particle size distribution with a d₅₀ between 0·1 and 0·7 micrometer in a liquid detergent composition.

2. The use as claimed in Claim 1, characterised in that the d₅₀ is above 0·4 micrometers.

3. The use as claimed in Claim 1 or 2, characterised in that the d₈₀ is below 1 micrometer.

4. The use as claimed in any of Claims 1-3, characterised in that the d₉₀ is below 3 micrometers.

5. A liquid detergent composition, characterised in that it contains from 1 to 40% by weight of a 4A- and/or P1-type zeolite powder which has a particle size distribution with a d₅₀ between 0·1 and 0·7 micrometer.

6. A liquid detergent composition as claimed in Claim 5, characterised in that it contains 10 to 30% by weight of the zeolite powder.

7. A liquid detergent composition as claimed in Claim 5 or 6, characterised in that the zeolite material has a d₅₀ above 0·4 micrometer.

8. A liquid detergent composition as claimed in Claim 5, 6 or 7, characterised in that the zeolite material has a d₈₀ below 1 micrometer.

9. A liquid detergent composition as claimed in Claim 5, 6, 7 or 8, characterised in that the d₉₀ is below 3 micrometers.

## Patentansprüche

1. Verwendung eines Zeolithpulvers des 4A- und/oder P1-Typs, das in einem flüssigen Reinigungsmittel eine Teilchengrößenverteilung mit einem d₅₀-Wert zwischen 0,1 und 0,7 Mikrometern hat.

2. Verwendung nach Anspruch 1, dadurch gekennzeichnet, daß der d₅₀-Wert über 0,4 Mikrometern liegt.

3. Verwendung nach Anspruch 1 oder 2, dadurch gekennzeichnet, daß der d₈₀-Wert unter 1 Mikrometer liegt.

4. Verwendung nach irgendeinem der Ansprüche 1 bis 3, dadurch gekennzeichnet, daß der d₉₀-Wert unter 3 Mikrometern liegt.

5. Flüssiges Reinigungsmittel, dadurch gekennzeichnet, daß es 1 bis 40 Gew.-% eines Zeolithpulvers des 4A- und/oder P1-Typs enthält, das eine Teilchengrößenverteilung mit einem d₅₀-Wert zwischen 0,1 und 0,7 Mikrometern hat.

6. Flüssiges Reinigungsmittel nach Anspruch 5, dadurch gekennzeichnet, daß es 10 bis 30 Gew.-% des Zeolithpulvers enthält.

7. Flüssiges Reinigungsmittel nach Anspruch 5 oder 6, dadurch gekennzeichnet, daß das Zeolithmaterial einen d₅₀-Wert über 0,4 Mikrometern hat.

8. Flüssiges Reinigungsmittel nach Anspruch 5, 6 oder 7, dadurch gekennzeichnet, daß das Zeolithmaterial einen d₈₀-Wert unter 1 Mikrometer hat.

9. Flüssiges Reinigungsmittel nach Anspruch 5, 6, 7 oder 8, dadurch gekennzeichnet, daß der d₉₀-Wert unter 3 Mikrometern liegt.

## Revendications

1. Utilisation d'une poudre de zéolite de type 4A et/ou P1 ayant une distribution des tailles de particules avec un d₅₀ compris entre 0,1 et 0,7 micromètre dans une composition détergente liquide.

2. Utilisation telle que revendiquée dans la revendication 1, caractérisée en ce que le d₅₀ est superieur à 0,4 micromètre.

3. Utilisation telle que revendiquée dans la revendication 1 ou 2, caractérisée en ce que le d₈₀ est inférieur à 1 micromètre.

4. Utilisation telle que revendiquée dans l'une quelconque des revendications 1 à 3, caractérisée en ce que le d₉₀ est inférieur à 3 micromètres.

5. Composition détergente liquide, caractérisée en ce qu'elle contient de 1 à 40% en poids d'une poudre de zéolite de type 4A et/ou P1 qui possède une distribution des tailles de particules avec un d₅₀ compris entre 0,1 et 0,7 micromètre.

6. Composition détergente liquide telle que revendiquée dans la revendication 5, caractérisée en ce qu'elle contient de 10 à 30% en poids de poudre de zéolite.

7. Composition détergente liquide telle que revendiquée dans la revendication 5 ou 6, caractérisée en ce que le matériau de zéolite possède un d₅₀ inférieur à 0,4 micromètre.

8. Composition détergente liquide telle que revendiquée dans la revendication 5, 6 ou 7, caractérisée en ce que le matériau de zéolite possède un d₈₀ inférieur à 1 micromètre.

9. Composition détergente liquide telle que revendiquée dans la revendication 5, 6, 7 ou 8, caractérisé en ce que le d₉₀ est inférieur à 3 micromètres.
